# FASCICULE DE BREVET EUROPEEN

(11) **EP 3 092 777 B1**
(45) Date de publication et mention de la délivrance du brevet: **26.09.2018**
(21) Numéro de dépôt: 15702519.8
(22) Date de dépôt: 05.01.2015
(51) Int. Cl.: H04N 21/433, H04N 21/2343, H04N 21/2662, H04L 1/00, H04L 29/06, H04N 21/44, H04N 21/442, H04N 21/845

(54) **PROCEDE DE TRAITEMENT D'ERREUR DE RESTITUTION D'UN CONTENU NUMERIQUE**
VERFAHREN ZUR VERARBEITUNG DES WIEDERHERSTELLUNGSFEHLERS IN BEZUG AUF EINEN DIGITALEN INHALT
METHOD OF PROCESSING THE RESTITUTION ERROR IN RESPECT OF A DIGITAL CONTENT

(30) Priorité: 07.01.2014 FR 1450083
(43) Date de publication de la demande: 16.11.2016
(73) Titulaire: Orange, 75015 Paris (FR)
(72) Inventeur: KERVADEC, Sylvain, 35490 Sens de Bretagne (FR); RUELLOU, Pierre, 35410 Domloup (FR)
(86) Numéro de dépôt international: PCT/FR2015/050009
(87) Numéro de publication internationale: WO 2015/104490

(56) Documents cités:
- WO-A1-2013/004260
- US-A1- 2013 182 705
- INTEL: "Another Potential Solution for Server and Network Assisted DASH", 3GPP DRAFT; S4-130952_DASH_SAND_SOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Vancouver, Canada; 20130923 - 20130927 18 septembre 2013 (2013-09-18), XP050727640, Extrait de l'Internet: URL:http://www.3gpp.org/ftp/tsg_sa/WG4_COD EC/TSGS4_75/Docs/ [extrait le 2013-09-18]
- TELEFON AB LM ERICSSON ET AL: "IMS based Adaptive HTTP Streaming", 3GPP DRAFT; S4-100783_IMS_HTTP_STREAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Barcelona, Spain; 20101108, 2 novembre 2010 (2010-11-02), XP050527312,

## Description

### DOMAINE TECHNIQUE

L'invention appartient au domaine de la distribution de contenus numériques et concerne en particulier un procédé de sélection d'une représentation d'un contenu numérique parmi une pluralité de représentation disponibles pour ce même contenu lors d'une erreur de restitution.

### ART ANTÉRIEUR

Avec la démocratisation des accès internet haut débit, les utilisateurs utilisent de plus en plus les technologies de diffusion en continu, dites de « streaming », qui permettent la consultation de contenus sans téléchargement préalable. On peut aussi noter que les utilisateurs disposent aujourd'hui de multiples terminaux à partir desquels ces contenus sont consultables. Il est par exemple possible d'accéder à une vidéo à partir d'un ordinateur personnel, d'une télévision connectée ou encore à partir d'un terminal mobile de type smartphone (téléphone intelligent) ou tablette. Ces terminaux disposent de capacités hétérogènes, notamment en termes d'affichage, de connectivité et de capacité de traitement. Afin de permettre la consultation d'un même contenu en streaming à partir de terminaux hétérogènes, des technologies de streaming adaptatif ont été développées, comme par exemple la solution http Live Streaming (HLS) développé par la société Apple® ou encore le standard MPEG-DASH (Dynamic Adaptative Streaming over http) tel que décrit dans la norme ISO/IEC 23009-1:2012.

En particulier, le standard MPEG-DASH propose de fractionner les contenus à diffuser en segments de courte durée. Chaque segment est rendu disponible à différents débits de façon à ce que pour chacun d'eux, le terminal puisse restituer la version la plus adaptée à ses capacités. Par exemple, une télévision connectée disposant d'un accès internet haut débit peut restituer une représentation haute qualité d'un contenu numérique alors qu'un terminal mobile sélectionnera une représentation bas débit du même contenu. MPEG-DASH permet également aux terminaux de s'adapter dynamiquement et de manière transparente à des conditions réseau changeantes.

Les adresses et caractéristiques des différentes représentations d'un même contenu sont publiées dans un support d'informations de description comme par exemple un fichier manifeste. Dans le cas de MPEG-DASH, ce fichier est appelé MPD (Media Présentation Description). Ce fichier est destiné aux terminaux et décrit des informations sur les segments disponibles, comme par exemple les adresses des segments, la résolution vidéo ou encore le débit d'encodage des différents segments.

Il peut arriver sous certaines conditions qu'une représentation particulière d'un contenu annoncée dans un manifeste ne soit plus disponible à un moment donné. Par exemple, un opérateur d'un serveur de streaming peut décider de suspendre la diffusion d'une représentation haut débit d'un contenu numérique lorsqu'il constate que la charge du serveur atteint un seuil critique. La disparition soudaine d'une représentation provoque la plupart du temps une erreur de lecture sur les terminaux sur lesquels la représentation suspendue était en cours de restitution. Cet arrêt inopiné de la lecture est préjudiciable à l'expérience utilisateur. En effet, à la réception d'une telle erreur, un système de restitution selon l'état de l'art peut par exemple:
- Stopper la restitution et signaler une erreur à l'utilisateur,
- Réémettre la requête à intervalle croissant dans l'attente d'une réponse,
- Proposer à l'utilisateur de sélectionner une autre représentation,
- Sélectionner automatiquement une représentation de qualité moindre.

Ces comportements induisent généralement une coupure dans la restitution conduisant à l'abandon de la consultation par l'utilisateur lorsqu'elles surviennent trop fréquemment. Des techniques ont alors été développées pour informer un terminal de la suspension de la diffusion d'une représentation particulière.

Une première technique, mise en oeuvre sur le terminal, consiste à télécharger régulièrement une mise à jour du fichier manifeste de façon à disposer d'une description actualisée des différentes représentations d'un contenu. La solution HLS d'Apple®, par exemple, effectue une mise à jour du fichier manifeste à chaque fois qu'un segment est téléchargé. Cette technique présente toutefois l'inconvénient de générer un trafic additionnel pour traiter un problème exceptionnel.

Une autre technique, mise en oeuvre sur le serveur de streaming, consiste à insérer des informations dans le flux lui-même. En particulier il est possible d'indiquer que le fichier de manifeste a expiré, de façon à ce que le terminal puisse en télécharger une version modifiée. Cette technique permet également d'indiquer à un terminal qu'une représentation particulière d'un contenu n'est plus disponible. Toutefois, cette technique présente des inconvénients: d'une part, elle nécessite une mise en forme particulière des flux à diffuser pour y insérer l'information, et d'autre part l'information ne peut être connue du terminal que lorsque celui-ci décode le flux correspondant. Lorsque la diffusion d'une représentation particulière est suspendue, un terminal ne peut plus recevoir les informations insérées dans le flux correspondant.

Le document 3GPP d'Intel "Another Potential Solution for Server and Network Assisted DASH", Conférence 3GPP TSG-SA4 #75, Vancouver, Canada, 23-27 Septembre 2013, décrit un système HTTP de diffusion dynamique et adaptatif appelé DASH transmettant des paramètres de Qualité de Service, QoS, au moyen d'une description de présentation de media, MPD. En particulier, un MPD transporte les informations de taux de bits garanti, GBR, et maximum, MBR. En cas d'événement de congestion radio, c'est-à-dire quand la mémoire tampon de lecture est pleine, ou en cas d'erreurs, la représentation avec le taux de bit le plus élevé satisfaisant les exigences de qualité de service et de débit réseau est sélectionnée pour la transmission.

Il existe donc un besoin pour une solution simple qui minimise l'impact sur l'expérience utilisateur en cas de non disponibilité d'une représentation d'un contenu en cours de restitution.

### EXPOSÉ DE L'INVENTION

À cet effet, la présente invention améliore la situation.

Un premier aspect de l'invention concerne un procédé de traitement d'erreur au cours de la restitution d'un contenu numérique lors d'une session multimédia sur un terminal, ladite session proposant une pluralité de représentations dudit contenu numérique décrites dans un support d'informations de description de la session multimédia transmis indépendamment des données de représentation, le procédé étant tel qu'il comporte suite à l'obtention du support d'information de description des étapes d'obtention, pour au moins une représentation particulière indiquée dans le support d'informations de description, d'une valeur de disponibilité associée à ladite représentation particulière, selon laquelle la diffusion des données de ladite représentation ne sera pas suspendue par le serveur ; de comparaison de la valeur de disponibilité obtenue avec au moins une valeur prédéterminée ; de sélection d'une représentation de repli en fonction du résultat de la comparaison, et sur détection d'une erreur de restitution, de basculement vers la représentation de repli sélectionnée.

Le procédé propose ainsi d'extraire à partir d'un support d'information de description, comme par exemple un fichier manifeste, une information de garantie de disponibilité associée à une représentation particulière du contenu. Contrairement à l'art antérieur, lorsqu'une erreur de restitution survient suite à l'indisponibilité soudaine d'une représentation particulière en cours de restitution, le terminal peut sélectionner une représentation dont la disponibilité est garantie et poursuivre la restitution du contenu à partir de cette représentation sans risquer une nouvelle interruption pouvant à terme provoquer un abandon de la lecture par un utilisateur lassé. Le procédé permet ainsi avantageusement d'éviter une dégradation de l'expérience utilisateur liée à l'arrêt de la restitution ou à la sélection d'une représentation alternative qui n'est pas disponible non plus.

Selon un autre mode de réalisation, le procédé est tel que la représentation de repli est sélectionnée préalablement à la détection d'erreur.

Le terminal peut ainsi basculer très rapidement sur une représentation dont la disponibilité est garantie lorsqu'une erreur de restitution survient.

Selon un mode de réalisation particulier, le procédé est tel que la représentation de repli est sélectionnée au moment de l'erreur.

De cette façon, si une version actualisée du manifeste a été téléchargée par le terminal entre le début de la restitution et la survenue de l'erreur, la sélection d'une représentation de repli peut être réalisée sur la base de ce nouveau manifeste.

Alternativement, le procédé est tel que l'information de garantie de disponibilité pourrait comprendre une information représentative d'un type de garantie appartenant au groupe comprenant au moins une garantie de disponibilité de la représentation ; une garantie de rapidité d'accès à la représentation ; et une garantie de disponibilité à partir de tout points d'accès, ainsi qu'une information de valeur associée au type de garantie.

La disponibilité d'une représentation particulière telle que définie par l'invention concerne sa disponibilité dans le temps et garantit par exemple que la diffusion de la représentation ne sera pas suspendue. De cette façon, suite à une erreur de restitution, le terminal peut poursuivre la lecture d'un contenu en sélectionnant une représentation dont la diffusion ne sera pas suspendue.

L'information de garantie de disponibilité pourrait alternativement correspondre à une garantie de latence réduite lors de l'accès au contenu. De cette façon, un terminal peut sélectionner un flux immédiatement disponible dans le but d'améliorer l'expérience utilisateur lors de la sélection d'une représentation alternative. Cette garantie de latence réduite peut par exemple correspondre à la mise de la représentation correspondante dans un cache réseau.

La disponibilité pourrait encore alternativement correspondre à une disponibilité liée au réseau d'accès à la représentation. Par exemple, lorsque certaines représentations ne sont disponibles que dans certaines parties du réseau, l'information de disponibilité peut permettre au terminal de sélectionner une représentation disponible localement et d'éviter la sélection d'une représentation disponible uniquement sur certains autres PoP (Point Of Presence).

Selon un autre mode de réalisation particulier, le procédé est tel que l'information de garantie de disponibilité comprend en outre une donnée représentative d'une période temporelle de validité associée au type de garantie.

Le support d'information de description peut comprendre une information temporelle, comme par exemple une durée, associée à l'information de disponibilité. Un terminal peut ainsi connaître la durée pendant laquelle la disponibilité d'une représentation particulière est garantie. Cette information est particulièrement utile lorsque qu'un contenu est composé de différentes séquences, car ces séquences peuvent ne pas être disponibles dans toutes les représentations. Par exemple, un spot publicitaire peut n'être disponible qu'en basse qualité alors que le contenu dans lequel il est inséré peut être disponible en haute qualité. Le procédé selon l'invention permet au terminal de sélectionner, pour une période prédéterminée, une représentation compatible avec le spot publicitaire dont la disponibilité est garantie.

Selon un autre mode de réalisation, le procédé est tel que l'étape de sélection de la représentation de repli est répétée à l'expiration de la période de validité associée à l'information de garantie de disponibilité de la représentation de repli sélectionnée.

Le terminal peut ainsi, lorsque la disponibilité de la représentation en cours de restitution n'est plus garantie, sélectionner une nouvelle représentation disposant d'une garantie de disponibilité associée à une période de validité à venir ou non expirée.

L'invention concerne également un dispositif de traitement d'erreur au cours de la restitution d'un contenu numérique lors d'une session multimédia, ladite session proposant une pluralité de représentations dudit contenu numérique décrites dans un support d'informations de description de la session multimédia transmis indépendamment des données de représentation, le dispositif étant tel qu'il comporte des unités d'obtention (306), pour au moins une représentation particulière indiquée dans les informations de description, à partir des informations de description, d'au moins une valeur de disponibilité associée à ladite représentation particulière, selon laquelle la diffusion de données de ladite représentation ne sera pas suspendue par le serveur, de comparaison (305) de la valeur de disponibilité obtenue avec une valeur prédéterminée ; de sélection (307) d'une représentation de repli en fonction du résultat de la comparaison ; et de basculement vers la représentation de repli sélectionnée sur détection d'une erreur de restitution.

Selon un autre aspect, l'invention concerne un programme d'ordinateur comportant les instructions pour l'exécution du procédé de traitement d'erreur, lorsque le programme est exécuté par un processeur.

Un autre aspect concerne également un support d'informations lisible par un ordinateur sur lequel est enregistré un programme d'ordinateur comprenant des instructions pour l'exécution des étapes du procédé de traitement d'erreur.

Les dispositifs, programmes et supports d'informations présentent des avantages analogues à ceux du procédé correspondant décrit ci-dessus.

### DESCRIPTION DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre une architecture adaptée pour la mise en oeuvre de l'invention selon un mode de réalisation,
- La figure 2 représente sur un chronogramme les messages pouvant être échangés entre un serveur et un terminal mettant en oeuvre le procédé de traitement d'erreur selon un mode particulier de réalisation de l'invention,
- La figure 3 illustre l'architecture d'un dispositif adapté pour la mise en oeuvre du procédé de traitement d'erreur selon un mode particulier de réalisation.

### DESCRIPTION D'UN MODE PARTICULIER DE RÉALISATION

Dans la description qui suit, il faut entendre par « représentation » une version d'un contenu encodé à une résolution et/ou un débit particulier. Par exemple, dans le cas d'un système de streaming adaptatif du type MPEG-DASH, un même contenu numérique peut être disponible en plusieurs résolutions et/ou débits, chacune de ces versions correspondant alors à une représentation.

Dans la suite de cet exposé, il faut entendre par « manifeste » une description des différentes représentations d'un contenu numérique stockées dans un support de description tel que par exemple un fichier. Le manifeste peut correspondre par exemple à un fichier MPD suivant le standard MPEG-DASH ou encore un fichier « Playlist » dans le cas de la solution HLS de la société Apple®. D'une manière générale, le manifeste tel qu'on l'entend dans ce document est un fichier constituant le point d'entrée pour un terminal souhaitant restituer un contenu numérique et contient en particulier les adresses d'accès aux différents segments correspondant aux différentes représentations d'un contenu disponible à la lecture en streaming ainsi que des caractéristiques associées à ces représentations.

La notion de « garantie de disponibilité » dont il est question dans ce document concerne particulièrement une garantie de mise à disposition des données de représentation par le serveur de diffusion. La distribution des données de représentation depuis le serveur de diffusion jusqu'au terminal de restitution peut quant à elle ne pas être garantie. On peut aussi noter que l'information de garantie de disponibilité peut également être interprétée comme un risque d'indisponibilité d'une représentation, une garantie de disponibilité de valeur maximale correspondant à un risque d'indisponibilité minimal et vice versa.

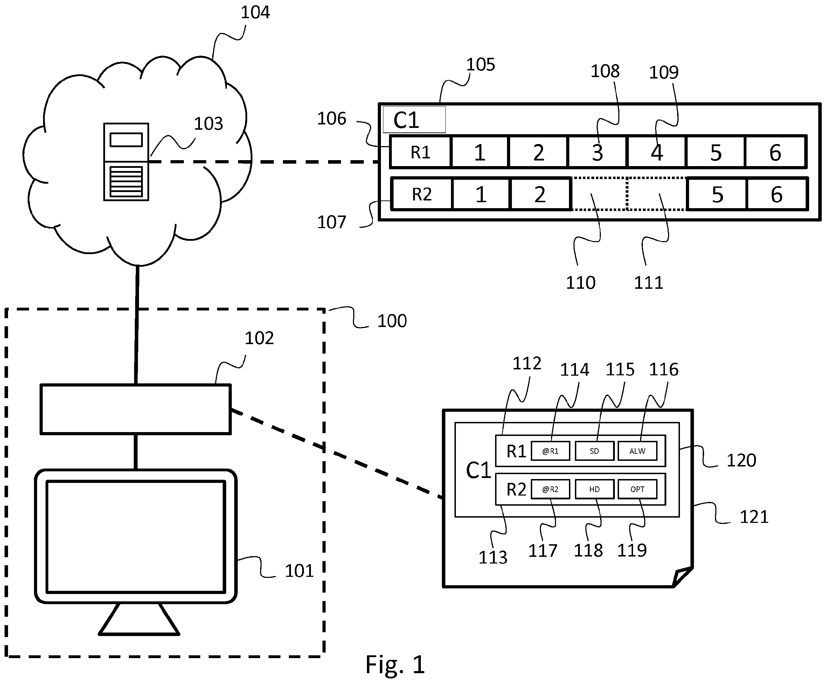

La figure 1 illustre un environnement adapté pour la mise en oeuvre du procédé de traitement d'erreur selon un mode de réalisation particulier de l'invention. L'environnement comprend un système de restitution vidéo 100 constitué par exemple d'un téléviseur 101 auquel est raccordé un décodeur numérique 102. Le système de restitution est connecté à un réseau de communication 104 par l'intermédiaire d'un accès réseau, par exemple un accès internet haut débit de type ADSL. Le réseau de communication 104 peut être par exemple de type CDN (Content Delivery Network pour réseau de distribution de contenu en anglais) et il n'échappera pas à l'homme du métier que ce type de réseau peut comprendre d'autres équipements qui ne sont volontairement pas représentés sur la figure 1 dans un souci de clarté de la description. Ce réseau de communication 104 comprend au moins un serveur 103 apte à diffuser des contenus numériques suivant un protocole de streaming adaptatif. De façon non limitative, le serveur peut par exemple diffuser des contenus sur HTTP (Hypertext Transfer Protocol) suivant le standard MPEG-DASH, Apple® HLS ou encore Adobe® Dynamic Streaming. Le système de restitution 100 est ainsi apte à recevoir, décoder et restituer des contenus numériques diffusés par le serveur de streaming 103 via le réseau de communication 104.

Le serveur 103 peut par exemple héberger un contenu numérique C1 (105) préparé pour une diffusion en streaming adaptatif. Dans la plupart des standards de streaming adaptatif, la préparation du contenu C1 pour une diffusion en streaming adaptatif consiste à produire différentes versions de ce contenu, encodées par exemple à des qualités, résolutions ou débits différents, de façon à offrir aux terminaux souhaitant consulter une version de ce contenu adaptée à leur capacité de restitution. La préparation du contenu comprend également une étape de segmentation des différentes représentations en tronçons, appelés « media segments » ou « chunks » pouvant représenter quelques secondes de diffusion. Dans la suite de cet exposé, nous appellerons « représentation » une version particulière d'un même contenu. Par exemple, le contenu C1 de la figure 1 dispose de deux représentations segmentées R1 et R2 (106, 107). Les frontières des segments sont superposables, de façon à ce qu'un terminal puisse passer d'une représentation à l'autre à la fin de chaque segment de façon transparente pour l'utilisateur.

Le serveur met à disposition des terminaux une description des contenus disponibles comprenant en particulier les caractéristiques des différentes représentations disponibles pour un contenu donné. Cette description est par exemple appelée « MPD » (Media Présentation Description), « Playlist » ou « manifeste » suivant le standard utilisé. Dans la suite de cet exposé, nous appellerons « manifeste » une telle description. Un manifeste 121 peut être transmis sous la forme d'un signal porteur d'informations de description. Ce manifeste est par exemple téléchargé par le dispositif de restitution 100 lorsqu'il souhaite accéder au contenu C1 et peut comprendre une information de description 120 du contenu C1 comprenant la description (112, 113) des différentes représentations disponibles. Par exemple, la description de la représentation R1 du contenu C1 peut comprendre au moins une URL (Universal Resource Identifier) 114 d'accès aux segments composant la représentation et une information 115 relative à la qualité de la représentation. De même, la description de la représentation R2 du contenu C1 peut comprendre au moins une URL (Universal Resource Identifier) 117 d'accès aux segments composant la représentation et une information 118 relative à la qualité de la représentation. Ainsi, à partir du manifeste 121, le système de restitution 100 peut accéder à la représentation du contenu C1 la plus adaptée à ses caractéristiques et débuter la restitution.

Il faut noter que le manifeste décrit les différentes représentations d'un contenu à un instant donné et que la disponibilité d'une représentation particulière peut évoluer dans le temps. En d'autres termes, une représentation décrite dans un manifeste à un instant donné peut ne plus être disponible à un instant suivant alors que la restitution a débuté, ce qui provoque généralement une erreur de lecture sur le système de restitution. Par exemple, un serveur peut décider de suspendre la distribution d'une représentation de haute qualité lorsque sa charge dépasse un seuil critique. Dans d'autres cas de figure, certains segments d'un contenu peuvent n'être disponibles que dans certaines représentations. Par exemple sur la figure 1, les segments 108 et 109 de la représentation R1 correspondent à un spot publicitaire inséré dans le contenu C1. Le spot n'étant pas disponible en haute résolution, les segments correspondants 110 et 111 dans la représentation R2 (107) sont manquants, ce qui provoque l'arrêt de la restitution lorsque le système de restitution tente d'y accéder.

L'invention propose d'associer à au moins une représentation une information de garantie de disponibilité de cette représentation. Par exemple, la description de la représentation R1 présente dans le manifeste 121 comprend une information de disponibilité dans le temps 116 qui permet d'indiquer au terminal que la disponibilité de la totalité des segments de la représentation est garantie. Plus généralement, l'information de garantie de disponibilité est par exemple constituée d'un type de disponibilité et d'une valeur associée, la valeur associée est par exemple une valeur comprise dans un ensemble de valeurs prédéfini, une probabilité, un booléen, une chaine de caractère, ou toute autre valeur apte à donner une information de disponibilité.

Selon un mode particulier de réalisation, l'information de garantie de disponibilité peut être assortie d'une information temporelle représentative d'une période pendant laquelle l'information de garantie de disponibilité est valide.

Selon un mode de réalisation, l'information de garantie de disponibilité concerne en premier lieu la disponibilité dans le temps de la totalité des segments d'une représentation donnée. Par exemple, l'information de disponibilité 119 de la figure 1 permet d'indiquer au système de restitution 100 que la disponibilité des segments de la représentation R2 est optionnelle, c'est-à-dire qu'au moins une partie des segments la composant est susceptible de ne plus être accessible. De même, l'information de garantie de disponibilité 116 de la figure 1 permet d'indiquer au système de restitution 100 que la disponibilité des segments de la représentation R1 est garantie. Dans un fichier manifeste, l'information de disponibilité peut par exemple être traduite par :
- <availability :always> pour une représentation dont la disponibilité est garantie,
- <availability :optional> pour une représentation dont la diffusion peut être suspendue.

Selon un autre mode de réalisation, l'information de garantie disponibilité peut également correspondre à une latence lors de l'accès à une représentation particulière. Sa valeur reflète alors le fait qu'une représentation soit systématiquement mise en cache de façon à réduire le temps d'accès aux segments et ainsi améliorer le confort de lecture. L'information peut par exemple prendre un valeur telle que :
- <cacheability :always> pour une représentation systématiquement mise en cache,
- <cacheability :optional> pour une représentation pouvant ne pas être mise en cache.

Selon un autre mode de réalisation, l'information de disponibilité peut encore concerner la disponibilité d'une représentation depuis un accès particulier. Par exemple, un représentation haute définition d'un contenu vidéo peut ne pas être accessible depuis un accès mobile de type 3G ou être uniquement accessible depuis un accès résidentiel. L'information de disponibilité peut alors être traduite de la façon suivante dans le manifeste :
- <reachability :always> pour une représentation atteignable depuis n'importe quel point d'accès, ou encore
- <reachability :optional> pour une représentation pouvant être inaccessible depuis certains points d'accès.

Il convient de noter que l'homme du métier connait bien d'autre moyens d'exprimer une association type/valeur dans un document tel qu'un manifeste et que les exemples ci-dessus ne sont donnés qu'à titre indicatif dans le seul but d'illustrer cet exposé. D'autre part, ces différents modes de réalisation peuvent être combinés, les différentes informations de garantie pouvant cohabiter dans un même support de description.

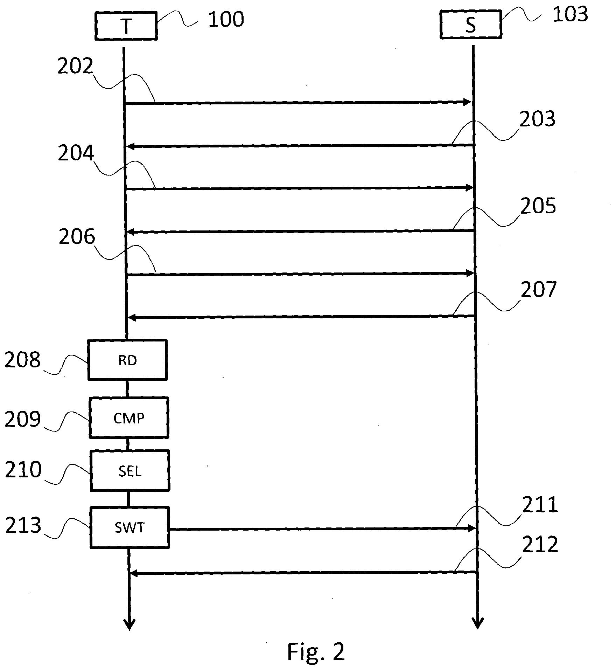

La figure 2 est un chronogramme qui représente, de façon simplifiée, des messages échangés lors de la consultation depuis le système de restitution 100 d'un contenu diffusé par le serveur 103 dans un exemple de réalisation de l'invention. En particulier, la figure montre des messages pouvant être échangés lorsqu'une erreur survient suite à la l'indisponibilité soudaine de la représentation en cours de restitution. Dans la suite de cet exposé, nous considérerons que les messages sont échangés suivant le protocole http, mais d'autres mises en oeuvre peuvent reposer sur d'autres protocoles d'échange de données.

Dans cet exemple, le système de restitution 100 télécharge dans un premier temps un manifeste depuis le serveur 103, en émettant par exemple une requête GET 202 à destination du serveur. Dans le contexte de cette invention, la localisation du manifeste n'a pas d'importance, il peut par exemple être téléchargé à partir d'un serveur distinct du serveur 108. En réponse 203 à cette requête, le serveur 103 transmet le manifeste 121 au système de restitution qui le stocke éventuellement dans une mémoire. À partir du manifeste 121, le système de restitution choisit selon certains critères de restituer la représentation R2107. Le système de restitution sélectionne par exemple une représentation haute qualité du contenu C1 parce que la consultation est effectuée depuis un environnement domestique disposant d'un accès internet haut débit et d'un matériel compatible. Le système de restitution débute la restitution en émettant une requête GET 204 pour télécharger les deux premiers segments R2.1 et R2.2 de la représentation R2 du contenu C1, en réponse 205 de laquelle il peut recevoir les segments à restituer. Le système de restitution 100 émet alors une nouvelle requête 206 afin d'obtenir les deux segments 110 et 111 suivants. Les segments demandés peuvent avoir été décrits dans le manifeste mais ne plus être disponibles au moment de la requête, par exemple pour des raisons citées précédemment. Dans ce cas, le serveur indique l'indisponibilité des segments demandés par une erreur 207.

Selon l'invention, le système de restitution obtient à partir du manifeste lors d'une étape 208, une information de garantie de disponibilité telle que décrite ci-dessus associée à au moins une représentation du contenu. Par exemple, le système de restitution peut consulter le manifeste 121 et en extraire les valeurs de disponibilité 116 et 119 correspondant aux représentations du contenu C1.

À l'étape 209, le procédé selon l'invention propose d'effectuer une comparaison avec une valeur de disponibilité prédéfinie. Par exemple, le système de restitution peut comparer les valeurs de disponibilité 116 et 119 des représentations R1 et R2 (112, 113) avec la valeur « ALW » indiquant dans cet exemple une disponibilité garantie. Toujours dans cet exemple, le système de restitution peut déterminer que la représentation R1 dispose d'une disponibilité garantie.

Le système de restitution peut alors sélectionner lors d'une l'étape 210 une représentation dont la disponibilité est garantie qui permettra avantageusement de poursuivre la consultation du contenu sans risque de nouvel incident. Dans cet exemple, le système de restitution sélectionne la représentation R1 et émet, lors d'une étape 213 une requête 211 afin de télécharger en réponse 212 les segments R1.3 et R1.4 (108, 109) et basculer sur la restitution de la représentation R1.

Selon un mode de réalisation particulier, le système de restitution peut également extraire une information temporelle associée à la donnée de disponibilité. Il peut s'agir par exemple d'une période pendant laquelle la disponibilité d'une représentation peut être garantie. Cela permet avantageusement de répondre à la problématique de l'insertion de certains spots publicitaires disponibles uniquement selon une représentation tel qu'évoqué plus haut, le système de restitution pouvant ainsi resélectionner la représentation déficiente après l'écoulement d'une certaine durée mesurée par exemple à l'aide d'une horloge.

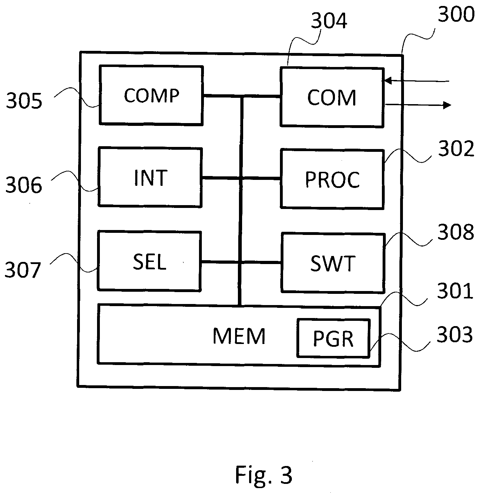

La figure 3 représente l'architecture simplifiée d'un dispositif 300 pouvant mettre en oeuvre le procédé de traitement d'erreur tel que décrit ci-dessus, selon un mode de réalisation particulier. Le dispositif comprend un espace de stockage 301, par exemple une mémoire MEM et une unité de traitement 302 équipée par exemple d'un processeur PROC. L'unité de traitement peut être pilotée par un programme 303, par exemple un programme d'ordinateur PGR, mettant en oeuvre le procédé de traitement d'erreur tel que décrit en référence à la figure 2, et notamment les étapes d'obtention (208), à partir des informations de description et pour au moins une représentation indiquée dans le support de description, d'au moins une information de disponibilité associée à la représentation ; de comparaison (209) des informations de disponibilité avec une valeur prédéterminée ; de sélection (210) d'une représentation de repli dont la disponibilité est garantie en fonction du résultat de la comparaison ; et de basculement (213) sur la représentation sélectionnée.

À l'initialisation, les instructions du programme d'ordinateur 303 sont par exemple chargées dans une mémoire RAM (Random Access Memory en anglais) avant d'être exécutées par le processeur de l'unité de traitement 302. Le processeur de l'unité de traitement 302 met en oeuvre les étapes du procédé de traitement d'erreur selon les instructions du programme d'ordinateur 303. Pour cela, le dispositif comprend, outre la mémoire 301, une unité de communication 304 (COM) permettant au dispositif de se connecter à un réseau de communication et d'échanger des données avec d'autres dispositifs par l'intermédiaire de ce réseau de communications. Cette unité de communication peut par exemple être une interface réseau et sert notamment à obtenir un signal porteur d'information de description, à émettre des requêtes et recevoir des réponses au travers du réseau de communication. Le dispositif comprend également une unité d'interprétation 306 (INT) du contenu d'un manifeste et particulièrement de lecture d'une information de disponibilité, une unité de comparaison 305 (COMP) d'une valeur de disponibilité avec une valeur prédéfinie, une unité de sélection 307 (SEL) d'une représentation en fonction du résultat de la comparaison et d'une unité de basculement 308 (SWITCH) vers la représentation sélectionnée.

Selon un mode de réalisation particulier, le dispositif peut être intégré dans un terminal de type décodeur numérique, Set Top Box, télévision connectée, tablette, téléphone mobile, ordinateur personnel, ou encore n'importe quel autre équipement de restitution connecté à un réseau de communication.

## Revendications

1. Procédé de traitement d'erreur au cours de la restitution d'un contenu numérique lors d'une session multimédia sur un terminal, ladite session proposant une pluralité de représentations dudit contenu numérique décrites dans un support d'informations de description de la session multimédia transmis indépendamment des données de représentation, le procédé étant **caractérisé en ce qu'**il comporte suite à l'obtention du support d'information de description, les étapes suivantes :
- Pour au moins une représentation particulière indiquée dans le support d'informations de description, obtention (208) d'une valeur de disponibilité associée à ladite représentation particulière, selon laquelle la diffusion des données de ladite représentation particulière ne sera pas suspendue par le serveur,
- Comparaison (209) de la valeur de disponibilité obtenue avec au moins une valeur prédéterminée,
- Sélection (210) d'une représentation de repli en fonction du résultat de la comparaison, et
- Sur détection d'une erreur de restitution, basculement (213) vers la représentation de repli sélectionnée.

2. Procédé selon la revendication 1, **caractérisé en ce que** la représentation de repli est sélectionnée préalablement à la détection d'erreur.

3. Procédé selon la revendication 1, **caractérisé en ce que** la représentation de repli est sélectionnée suite à la détection d'erreur.

4. Procédé selon l'une quelconque des revendications précédentes **caractérisé en ce que** la valeur de disponibilité comprend en outre une donnée représentative d'une période temporelle de validité associée au type de garantie.

5. Procédé selon la revendication 4 **caractérisé en ce que** la sélection de la représentation de repli est répétée à l'expiration de la période de validité associée à la valeur de disponibilité de la représentation de repli sélectionnée.

6. Dispositif de traitement d'erreur au cours de la restitution d'un contenu numérique lors d'une session multimédia, ladite session proposant une pluralité de représentations dudit contenu numérique décrites dans un support d'informations de description de la session multimédia transmis indépendamment des données de représentation, le dispositif étant **caractérisé en ce qu'**il comporte des unités:
- D'obtention (306) à partir des informations de description, pour au moins une représentation particulière indiquée dans les informations de description, d'au moins une valeur de disponibilité associée à ladite représentation particulière, selon laquelle la diffusion des données de ladite représentation particulière ne sera pas suspendue par le serveur,
- De comparaison (305) de la valeur de disponibilité obtenue avec une valeur prédéterminée,
- De sélection (307) d'une représentation en fonction du résultat de la comparaison, et
- De basculement (308) vers la représentation de repli sélectionnée sur détection d'une erreur de restitution.

7. Programme d'ordinateur comportant les instructions pour l'exécution du procédé selon l'une quelconque des revendications 1 à 5, lorsque le programme est exécuté par un processeur.

8. Support d'informations lisible par un ordinateur sur lequel est enregistré un programme d'ordinateur comprenant des instructions pour l'exécution des étapes du procédé de traitement d'erreur selon l'une quelconque des revendications 1 à 5.

## Patentansprüche

1. Verfahren zur Verarbeitung eines Fehlers während der Wiederherstellung eines digitalen Inhalts bei einer Multimediasitzung auf einem Endgerät, wobei die Sitzung eine Vielzahl von Darstellungen des digitalen Inhalts vorschlägt, die in einem Träger von Informationen zur Beschreibung der Multimediasitzung beschrieben sind, die unabhängig von den Darstellungsdaten übertragen werden, wobei das Verfahren **dadurch gekennzeichnet ist, dass** es nach dem Erhalt des Beschreibungsinformationsträgers die folgenden Schritte umfasst:
- für mindestens eine besondere Darstellung, die in dem Beschreibungsinformationsträger angegeben ist, Erhalt (208) eines Verfügbarkeitswerts, der der besonderen Darstellung zugeordnet ist, gemäß dem die Verbreitung der Daten der besonderen Darstellung vom Server nicht eingestellt wird,
- Vergleich (209) des erhaltenen Verfügbarkeitswerts mit mindestens einem vorbestimmten Wert,
- Auswahl (210) einer Backup-Darstellung in Abhängigkeit von dem Vergleich, und
- bei Erfassung eines Wiederherstellungsfehlers, Umschalten (213) in die ausgewählte Backup-Darstellung.

2. Verfahren nach Anspruch 1, **dadurch gekennzeichnet, dass** die Backup-Darstellung vor der Fehlererfassung ausgewählt wird.

3. Verfahren nach Anspruch 1, **dadurch gekennzeichnet, dass** die Backup-Darstellung nach der Fehlererfassung ausgewählt wird.

4. Verfahren nach einem der vorhergehenden Ansprüche, **dadurch gekennzeichnet, dass** der Verfügbarkeitswert ferner ein Datum umfasst, das für einen dem Garantietyp zugeordneten Gültigkeitszeitraum repräsentativ ist.

5. Verfahren nach Anspruch 4, **dadurch gekennzeichnet, dass** die Auswahl der Backup-Darstellung nach Ablauf des Gültigkeitszeitraums, der dem Verfügbarkeitswert der ausgewählten Backup-Darstellung zugeordnet ist, wiederholt wird.

6. Vorrichtung zur Verarbeitung eines Fehlers während der Wiederherstellung eines digitalen Inhalts bei einer Multimediasitzung auf einem Endgerät, wobei die Sitzung eine Vielzahl von Darstellungen des digitalen Inhalts vorschlägt, die in einem Träger von Informationen zur Beschreibung der Multimediasitzung beschrieben sind, die unabhängig von den Darstellungsdaten übertragen werden, wobei die Vorrichtung **dadurch gekennzeichnet ist, dass** sie Einheiten umfasst:
- für mindestens eine besondere Darstellung, die in dem Beschreibungsinformationsträger angegeben ist, zum Erhalt (306) mindestens eines Verfügbarkeitswerts, der der besonderen Darstellung zugeordnet ist, gemäß dem die Verbreitung der Daten der besonderen Darstellung vom Server nicht eingestellt wird,
- zum Vergleich (305) des erhaltenen Verfügbarkeitswerts mit mindestens einem vorbestimmten Wert,
- zur Auswahl (307) einer Darstellung in Abhängigkeit von dem Resultat des Vergleichs, und
- bei Erfassung eines Wiederherstellungsfehlers, zum Umschalten (308) in die ausgewählte Backup-Darstellung.

7. Computerprogramm, umfassend die Anweisungen für die Ausführung des Verfahrens nach einem der Ansprüche 1 bis 5, wenn das Programm von einem Prozessor ausgeführt wird.

8. Informationsträger, der von einem Computer lesbar ist, auf dem ein Computerprogramm gespeichert ist, umfassend Anweisungen für die Ausführung der Schritte des Verfahrens zur Verarbeitung eines Fehlers nach einem der Ansprüche 1 bis 5.

## Claims

1. Method for processing an error in the course of the rendering of a digital content during a multimedia session on a terminal, said session offering a plurality of representations of said digital content described in a descriptive information medium for the multimedia session transmitted independently of the representation data, the method being **characterized in that** after obtaining the descriptive information medium, it comprises the following steps:
- For at least one particular representation indicated in the descriptive information medium, obtaining (208) an availability value associated with said particular representation, according to which the broadcasting of the data of said particular representation will not be suspended by the server,
- Comparing (209) the availability value obtained with at least one predetermined value,
- Selecting (210) a fallback representation according to the result of the comparison, and
- On detection of a rendering error, switching (213) to the selected fallback representation.

2. Method according to Claim 1, **characterized in that** the fallback representation is selected prior to the error detection.

3. Method according to Claim 1, **characterized in that** the fallback representation is selected after the error detection.

4. Method according to any one of the preceding claims, **characterized in that** the availability value further includes an item of data representative of a temporal period of validity associated with the type of guarantee.

5. Method according to Claim 4, **characterized in that** the selection of the fallback representation is repeated at the expiration of the period of validity associated with the availability value of the selected fallback representation.

6. Device for processing an error in the course of the rendering of a digital content during a multimedia session, said session offering a plurality of representations of said digital content described in a descriptive information medium for the multimedia session transmitted independently of the representation data, the device being **characterized in that** it comprises units:
- For obtaining (306) from the descriptive information, for at least one particular representation indicated in the descriptive information, at least one availability value associated with said particular representation, according to which the broadcasting of the data of said particular representation will not be suspended by the server,
- For comparing (305) the availability value obtained with a predetermined value,
- For selecting (307) a representation according to the result of the comparison, and
- For switching (308) to the selected fallback representation on detection of a rendering error.

7. Computer program comprising the instructions for the execution of the method according to any one of Claims 1 to 5, when the program is executed by a processor.

8. Information medium readable by a computer on which a computer program is recorded including instructions for the execution of the steps of the error processing method according to any one of Claims 1 to 5.
